# EUROPEAN PATENT SPECIFICATION

(11) **EP 3 127 422 B1**
(45) Date of publication and mention of the grant of the patent: **27.03.2019**
(21) Application number: 15180301.2
(22) Date of filing: 07.08.2015
(51) Int. Cl.: A01G 9/02

(54) **ARRANGEMENT INTRODUCED IN A MODULAR VERTICAL GARDEN WITH AUTOMATED IRRIGATION AND NUTRITION**
ANORDNUNG, DIE IN EINEM MODULAREN VERTIKALEN GARTEN MIT AUTOMATISCHER BEWÄSSERUNG UND DÜNGUNG EINGEFÜHRT WIRD
AGENCEMENT INTRODUIT DANS UN JARDIN VERTICAL MODULAIRE À IRRIGATION ET NUTRITION AUTOMATISÉE

(43) Date of publication of application: 08.02.2017
(73) Proprietor: Goncalves, Renato Breuel, Maringa (BR)
(72) Inventor: Goncalves, Renato Breuel, Maringa (BR)
(74) Representative: Studio Torta S.p.A.

(56) References cited:
- WO-A1-2012/167304
- BR-A2- PI1 101 559
- US-A1- 2011 093 122
- US-A1- 2011 094 153
- US-A1- 2013 104 456
- US-A1- 2013 227 884

## Description

This patent application relates to an Arrangement Introduced In A Modular Vertical Garden With Automated Irrigation And Nutrition, particularly a modular vertical garden assembled by engagement fit plates without limit of size, for indoor and outdoor environments, which main characteristic resides in the fact that the plates are produced from recycled material with protection against ultraviolet radiation, lending enhanced durability end strength to the vertical garden, which is further provided with automated and sustainable irrigation of the plants with reuse of the water and suitable nutrition based on soluble fertilizers.

The field of application of the innovative vertical garden is the residential, industrial and business landscaping field, where it is more particularly intended for decoration and landscaping of the most varied environments and sizes, in which connection it may be of the indoor or outdoor type; for example, there may be obtained a vertical garden, vertical landscaping, a vertical vegetable garden for spices, medicinal plants and vegetables, without however being limited thereto.

A garden is a planned space, which can be located indoors or outdoors, and serves for displaying, cultivating and appreciating plants, flowers, vegetables, among others, and which may further incorporate both natural and/or artificial materials.

A garden is commonly found anywhere, due to its innumerous advantages and benefits; a well-cared garden induces sensations of restfulness, peacefulness, beauty and harmony with nature. Currently in residences, particularly due to limited availability of space, there are more frequently observed the suspended and vertical garden models, however there is a large number of gardens such as the English garden, the tropical garden, among others.

For this motive, the vertical gardens have been conquering space since they are created to alleviate the lack of green areas in urban centers and also to modify the landscape of locations with small spaces. Their applications occur both on internal walls and on external retaining walls. The systems may include automatic irrigation by dripping or they can be cared for manually, depending on size.

A green external front is an excellent form of revitalizing buildings and combating urban heat pockets, while in internal environments, the green wall is able to purify and clean the air, as it retains volatile organic compounds (VOCs), particulate materials, cigarette smoke, in addition to maintaining a pleasant thermal comfort.

There are various manners of building a garden, however all of those evidence disadvantages that render unfeasible the assembly and maintenance thereof, to wit:
- Ceramic and concrete pieces: those pieces have high weight which renders their transportation difficult; their installation is complex and might alter the structure and damage the user's asset, since they require masonry work with the use of cement, grout, paint, among others, for installation of the gardens, in addition to entailing a great difficulty in maintaining the plants, particularly in large gardens;
- Metallic grids for fluted or half-round pots: the product has a short useful life, due to the oxidation that generates rust on the structure and contaminates the plant. One other recurring problem is the lack of safety in the attachment of the pots;
- Geotextile blanket with a metal structure: similarly to the preceding solution, it evidences a short useful life due the oxidation of the structure. The assembly is very complex and lengthy and the plants take a long time to reach adult size. Replacement of the plants is quite complicated and leaves the garden subject to faults in appearance that hinder the intended natural aspect;
- Modular system for vertical garden: this technique, although it is the most trustworthy, evidences a short useful life, since it does not comprise any technology able to protect it ultraviolet radiation, which with the passage of time end up damaging the structure leaving the same unsuitable for its intended purpose. It does not comprise an automated system for irrigation and nutrition of the garden and does not provide side closure plates.

In light of the studies having been developed in that field, the inventor focused on bringing advancements to the vertical garden technology developed a product that solves the existing problem, avoiding the hindrances of construction work, alterations in structure, complex assembly and short useful life, by proposing a product which will provide to the user the advantages of easy handling, possibility of expansion, automated irrigation and nutrition, in addition to innumerous other benefits.

The current state of the art anticipates some patent documents that are related to the subject matter under consideration, such as *[BR]* PI 1101559-4, with the title "Sistema Modular Para Jardim Vertical" *[A Modular System for a Vertical Garden]* which basically consists in a vertical garden formed by a female modular piece with six female engagement points and a male modular piece with ten fixed pegs that engage perfectly being able to form sets of different sizes, further wherein the modular pieces have passages for irrigation water piping and points for attachment to the walls.

In this case, the mentioned patent presents as its inventive concept a modular system for a vertical garden provided with male and female engagement modules, being able to form various sizes with passages for the irrigation water piping and fastening, however that system merely provides the possibility of installing a vertical garden based on modules with engagement points, such modules having a passage for the irrigation piping and fastening orifices, evidencing the fact that it is a fragile product, with a short useful life, devoid of an automated irrigation and nutrition system, which renders difficult the handling thereof and the conservation of the plants, incurring the exact same disadvantages mentioned above.

Relevant prior art US 2011/094153 A1 describes an arrangement introduced in a modular vertical garden with automated irrigation and nutrition, assembled by: modular plates, configured for engagement by pins; clamps that form each of the modules closed by top plates; and, pots with upper orifices being matched to a dripper for the irrigation of a plant located within a sachet made of geotextile material. The modular vertical garden describes is not provided with a control panel that may be configured by an used to regulated periodic irrigations for the plants, neither a tray for collection of excess water and reuse of that water for new irrigation. Further, this prior art does not describe the use of ultraviolet resistant material.

On the other hand, prior art US 2011/093122 A1 describes a modular vertical garden provided with an irrigation and nutrition control system. The irrigation system may reuse rainwater for the plant irrigation. Further, prior art US 2013/0227884 describes a modular vertical garden made of ultraviolet resistant material.

Being aware of the prior art, its faults and limitations, the inventor, after having conducted studies and research, created the Arrangement introduced In A Modular Vertical Garden With Automated irrigation And Nutrition according to the appended set of claims. The invention is defined by claim 1.

In a general overview, conceives a modular vertical garden assembled with plates that can be engaged to one another without limits of size, for outdoor and indoor environments, which main distinctive aspect resides in the fact that the plates are produced from recycled material with protection against ultraviolet radiation, lending enhanced durability and strength to the vertical garden, which is also provided with automatic and sustainable irrigation, warranting the irrigation of the plants with reuse of the water and adequate nutrition based on soluble fertilizers.

The Arrangement introduced In A Modular Vertical Garden With Automated irrigation And Nutrition is a renewable solution product that may applied to various purposes such as: embellishment of outdoor and indoor environments, enhancing the beauty of the environment and providing a pleasant sensation of well-being to people, and when installed in great spaces it causes a natural cooling of the environment.

The plants of the Arrangement Introduced In A Modular Vertical Garden With Automated Irrigation And Nutrition create a thermal barrier, absorbing sunlight and reducing the heating of the environment, and in this case the arrangement is indicated as an option to reduce the use of the air conditioning system, which in addition to being expensive, consumes a large amount of electric power.

In the case of installation in indoor environments, the arrangement improves the quality of the air, absorbing pollutants, enhancing its moisture and healthiness. It can also provide a differentiated conditioning of the environment with the inclusion of aromatic plants.

The Arrangement Introduced In A Modular Vertical Garden With Automated Irrigation And Nutrition ensures full modular assembly to any widths and heights, with due regard to the proportions relative to the size of the modules, both accommodating the plants and enabling the maintenance and survival thereof through the automated irrigation according to each set of plant species kept by the user.

The mode of engagement of the modules is performed with pins and holes that secure the pieces forming symmetrical niches to accommodate the plants. The module may be mounted in its entirety to accommodate 3 plants and optionally the module may be shortened to accommodate 2 plants or 1 plant. The cut will be performed only in case of need, according to the width measure of each project. The angled module will be used for finishing of sides or for the formation of corners in outer walls meeting at 90° that have contiguous gardens.

The Arrangement Introduced In A Modular Vertical Garden With Automated Irrigation And Nutrition may be expanded to any sizes, both in width and in height. The modules are engaged at the sides by means of the fastening pins and are piled on top of one another closing the lower module. The last module at the top should be closed with a grid that finishes each column of modules.

The irrigation takes place by individual dripping through hoses and fittings that are made to pass through channels within the modules. The equipment for automation of the irrigation is installed in a control panel that will be able to serve up to 8 sectors programmed to irrigate and fertilize the plants in predefined hours.

For daily irrigation using only water, the water valve should be in the open position and the nutrients valve should be in the closed position.

For the addition of nutrients, the water valve should be closed and the nutrients valve should be open. The nutrients are diluted with water in a container, in the proportion indicated for the said garden.

The pump sucks the nutrients through the inlet, wherein is fitted an extension piece that connects the panel inlet to the nutrients container.

The electronic controller is regulated for periodic irrigations according to each case, and will control the vertical garden according to the days, minutes and sectors having been programmed.

The pressure regulators maintain the ideal water pressure for opening the drippers and correctly irrigate all the plants in the garden.

The filters avoid the ingress of dirt particles that might be present in the water and might otherwise block the drippers.

The circuit breaker protects the equipment and may be turned off in case of maintenance.

In summary, the claimed modular vertical garden with automated irrigation and nutrition provides the following as its main advantages:
- It warrants an automated modular vertical garden;
- The modules are injected with 99% recycled material and are protected against ultraviolet radiation;
- It may be installed in any sizes without limits of horizontal and vertical expansion;
- It is easily assembled and fasted to the wall with screws;
- It promotes the ideal irrigation of all the plants providing suitable nutrition with water and soluble fertilizers;
- It can be mounted on both indoor and outdoor environments;
- It is equipped with a control panel that warrants adequate irrigation and nutrition of the plants at predefined times;
- It does not allow moisture to seep and contact the wall;
- It provided easy maintenance and replacement of plants;
- It can be disassembled and reinstalled on another wall;
- It provides easy handling thereof;
- The cost x benefit ratio is optimum;
- The vertical garden comprises a collection tray at the lower base supported by side slidable channel pieces;
- The collected water is reused for a new irrigation.

The innovation is explained in the following with reference to the attached drawings, whose purpose is illustrative rather than limitative:

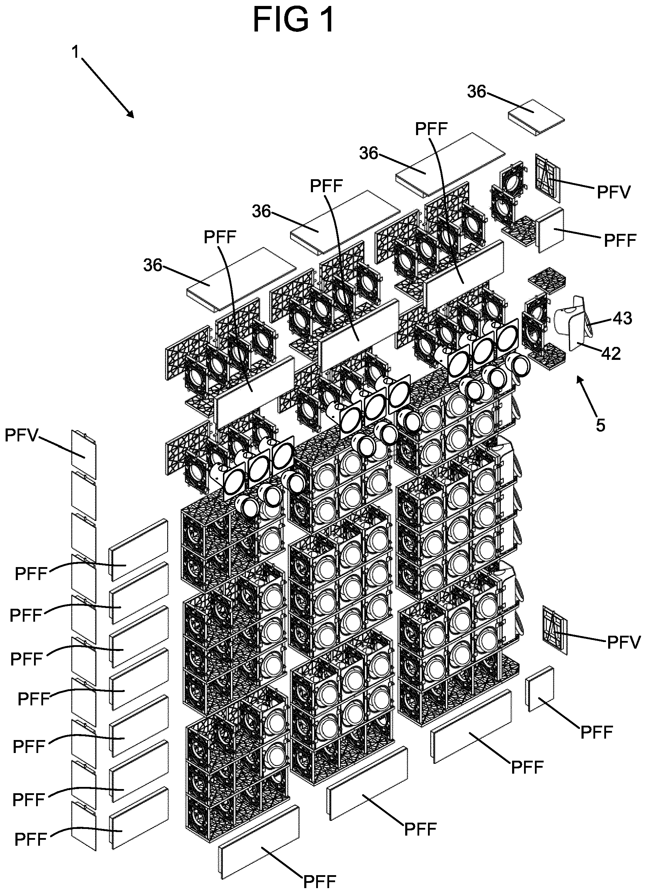

Fig. 1: Partially exploded perspective view of the arrangement introduced in a modular vertical garden with automated irrigation and nutrition;

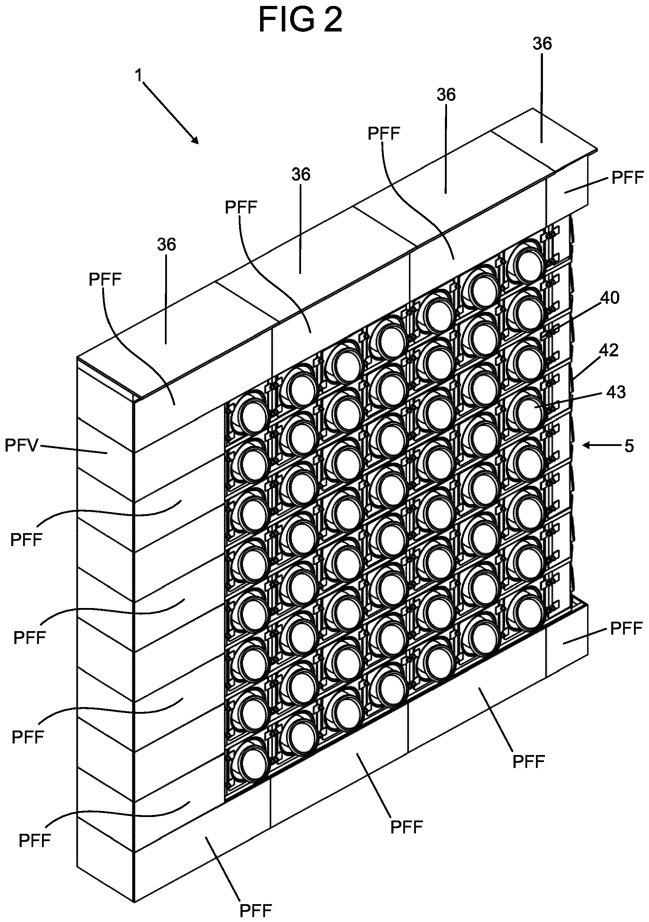

Fig. 2: Perspective view of the arrangement introduced in a modular vertical garden with automated irrigation and nutrition;

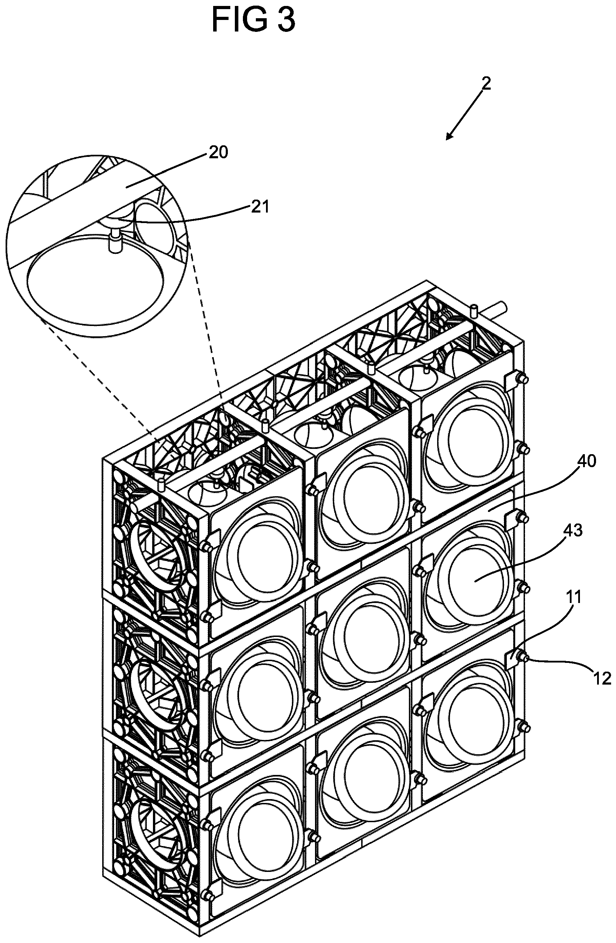

Fig. 3: Perspective view of three modules for nine plants, shown with the irrigation hose;

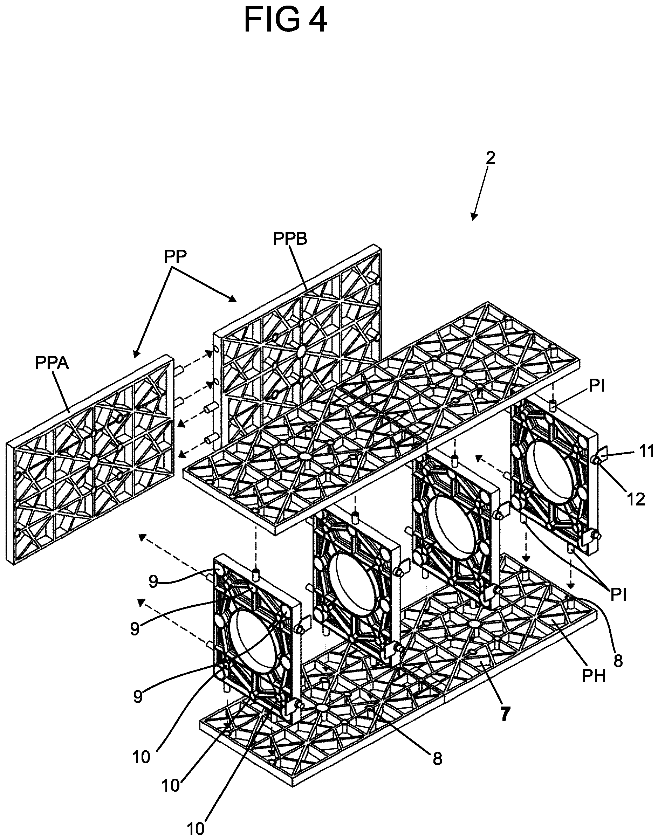

Fig. 4: Exploded perspective view of a module for three plants showing the engagement means without the irrigation hose;

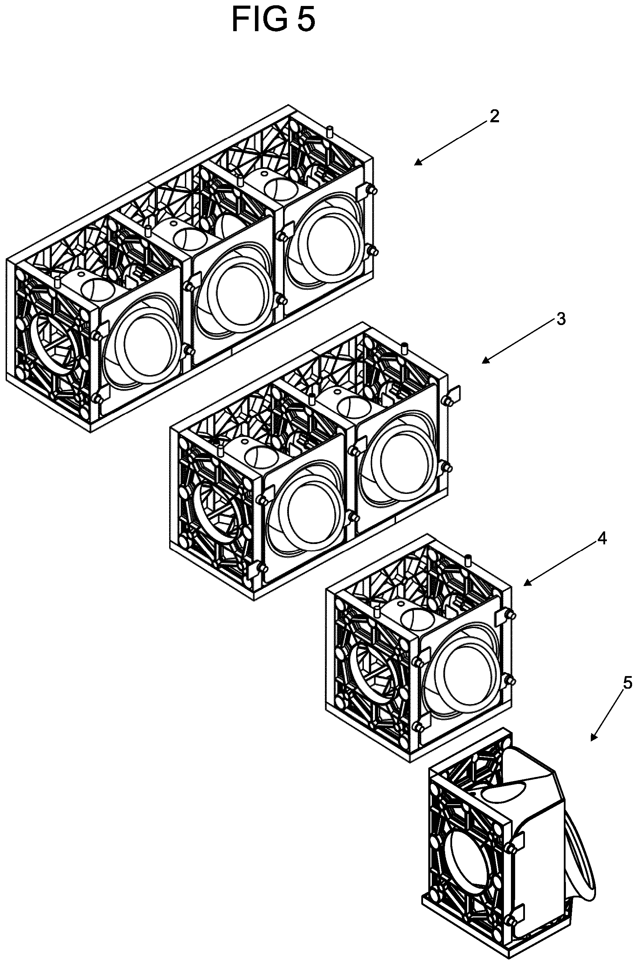

Fig. 5: Perspective view of the modules for three, two and one plant(s) and also of the corner piece;

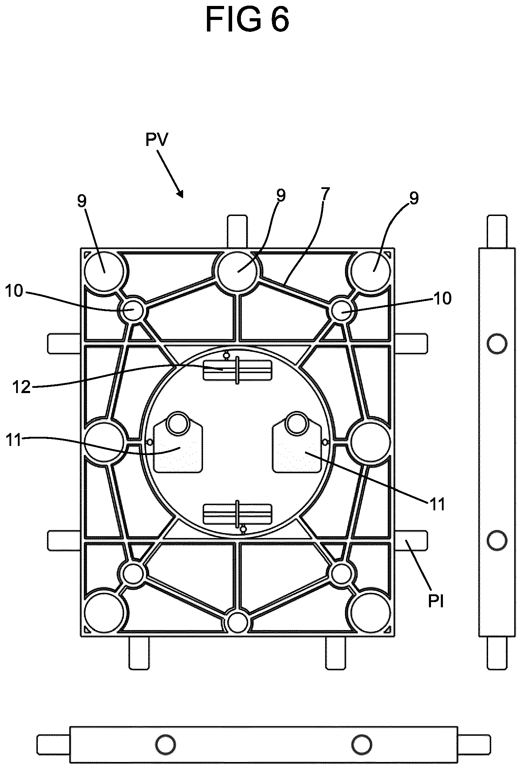

Fig. 6: Front, side and lower views of the vertical plate;

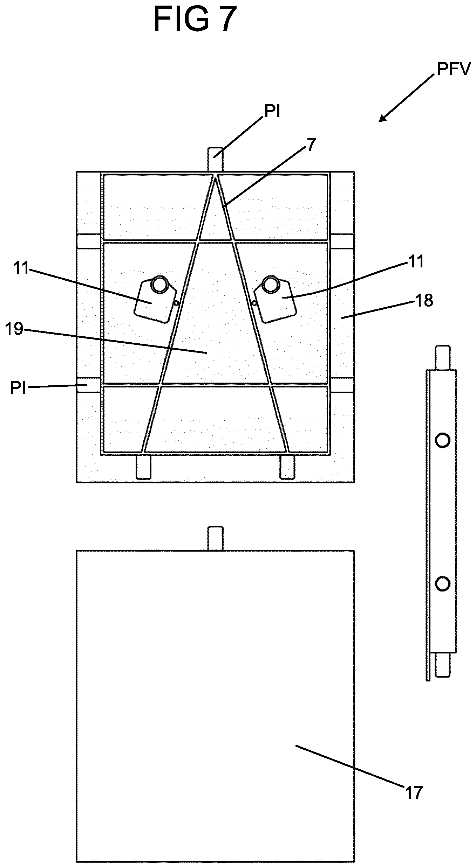

Fig. 7: Front, side and lower views of the vertical closure plate;

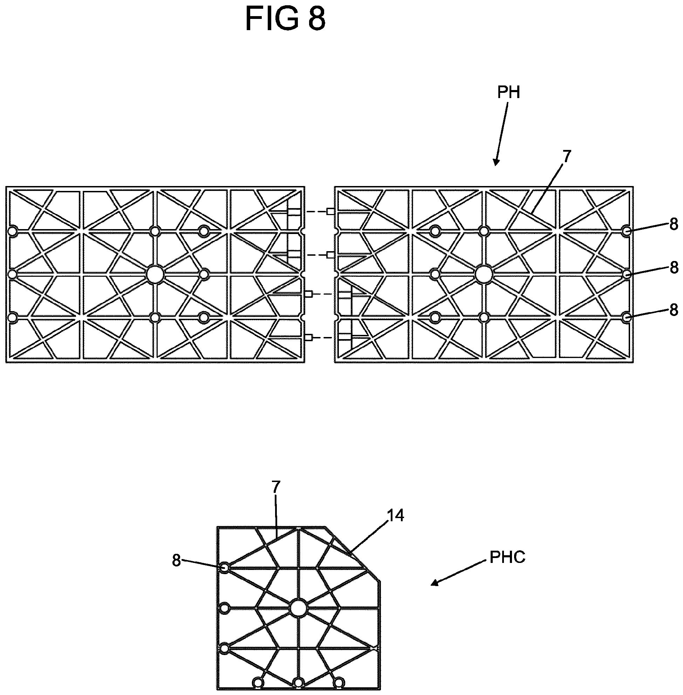

Fig. 8: Front view of the horizontal plate and of the horizontal corner plate;

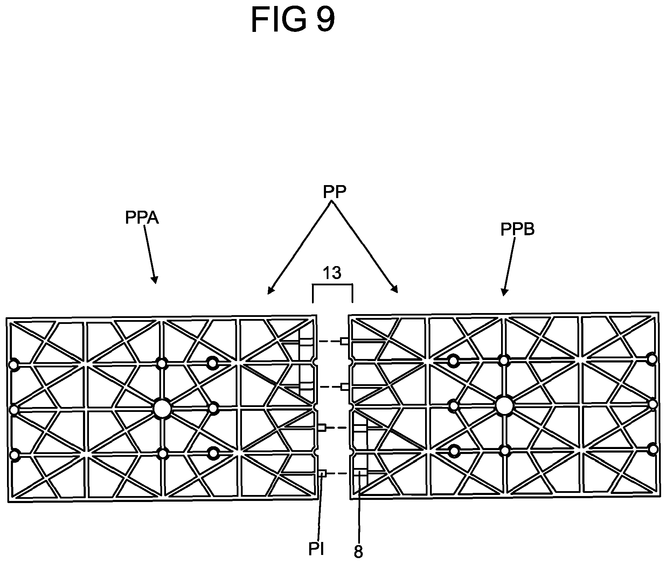

Fig. 9: Front view of the back plates of the vertical garden, showing the form of engagement therebetween;

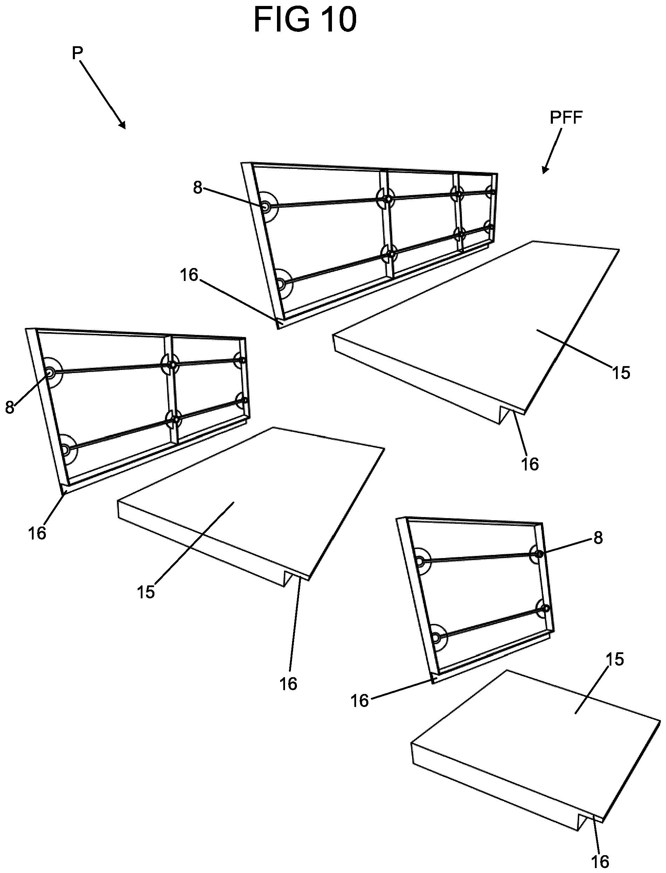

Fig. 10: Perspective view and inverted view of the front closure plate, showing the front and back parts for modules of three, two and one plant(s);

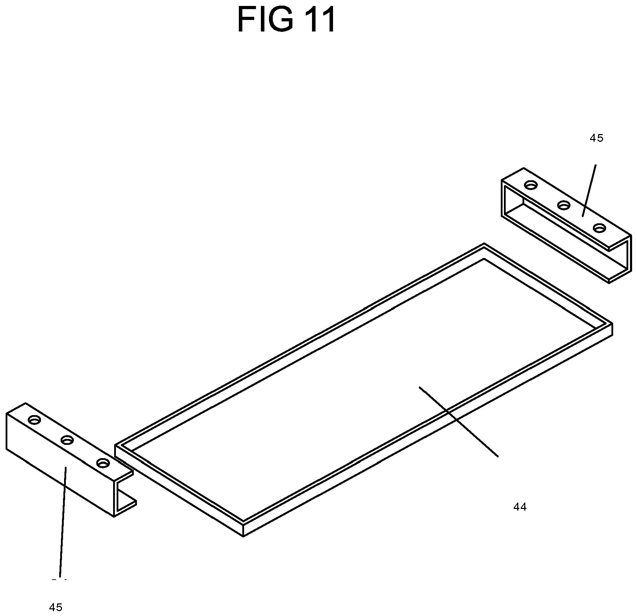

Fig. 11: Perspective view of the tray for collection of excess water and of the slidable channel piece for the tray;

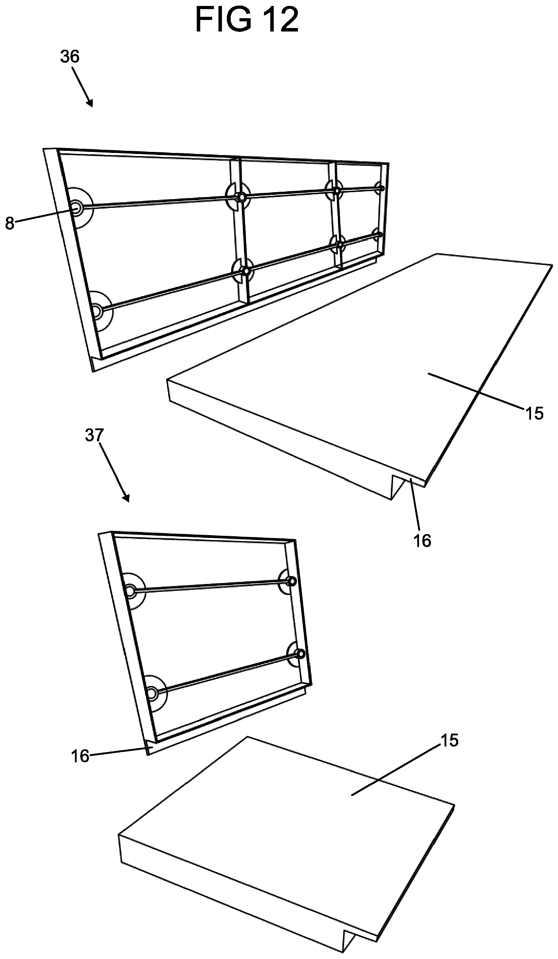

Fig. 12: Perspective view and inverted perspective view of the top plate for closure of the module and of the top plate for closure of the corner piece;

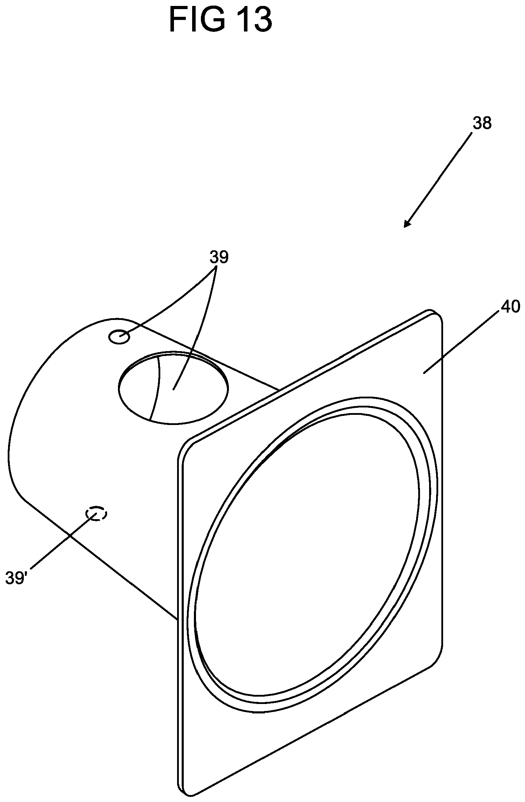

Fig. 13: Perspective view of the planting pot, showing the detail of the water inlet orifices;

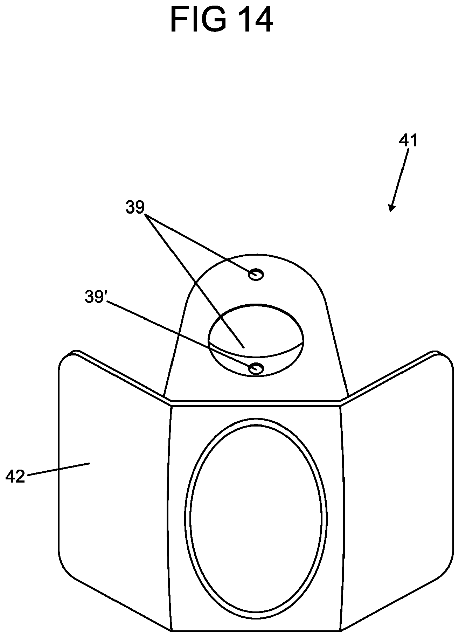

Fig. 14: Perspective view of the corner pot for planting, showing the detail of the water inlet orifices and the side wings;

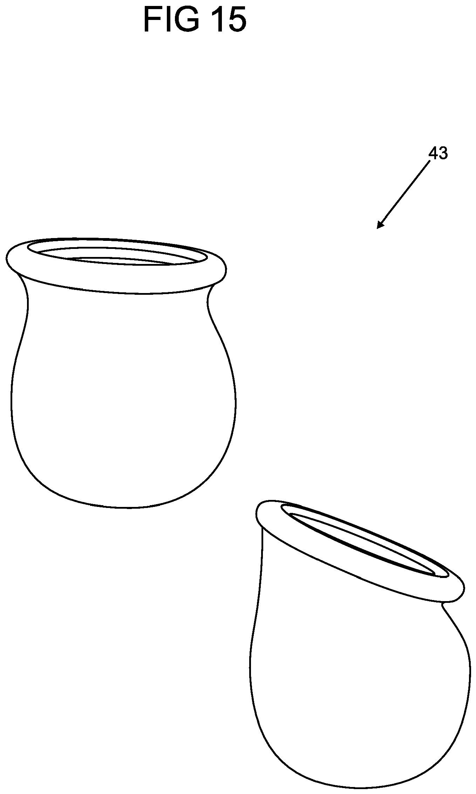

Fig. 15: Front and side views of the planting sachet;

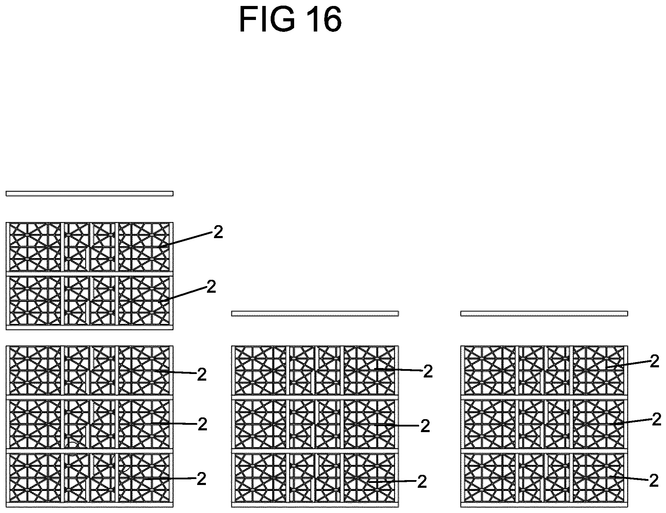

Fig. 16: Schematic view showing the possibility of horizontal and vertical expansion of the vertical garden;

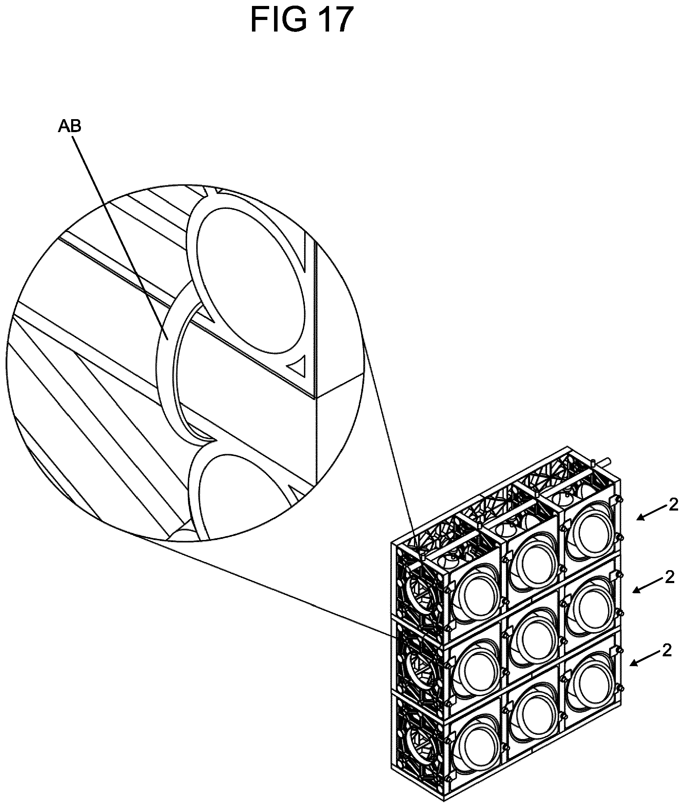

Fig. 17: Perspective view of three assembled modules, showing the detail of locking of the modules with the plastic clamps;

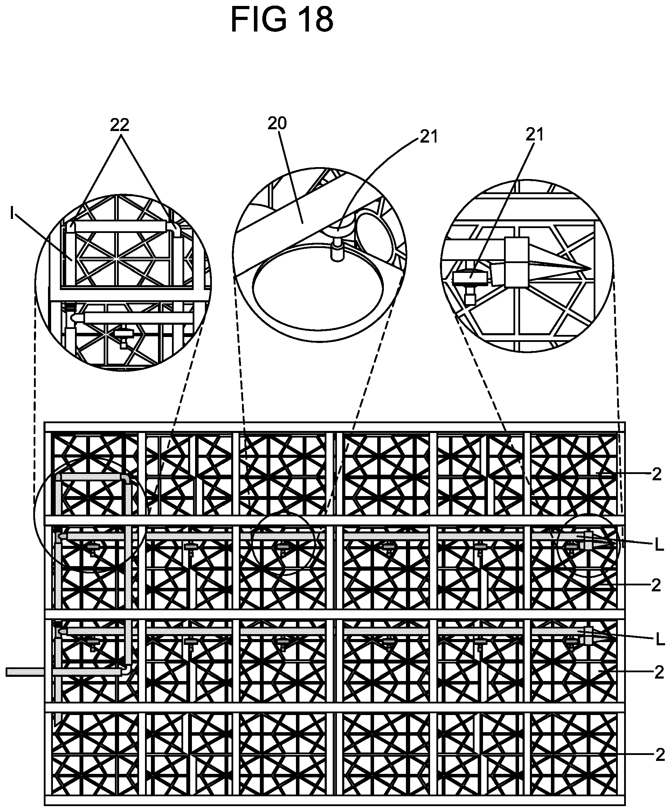

Fig. 18: Schematic view of the assembled module, showing the position of the hoses, the connectors and the irrigation drippers;

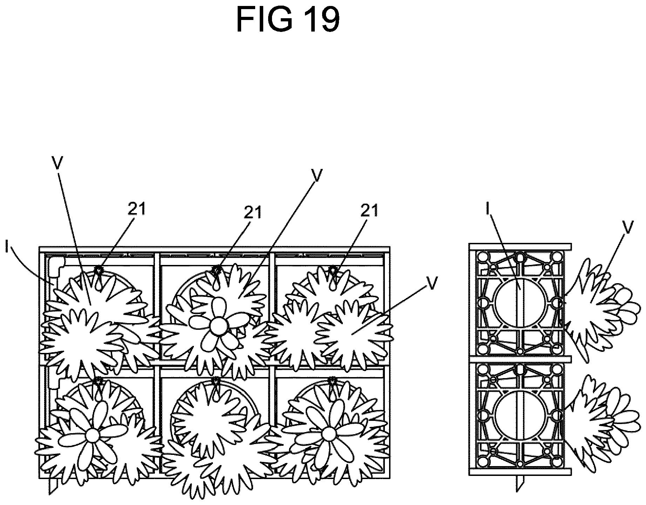

Fig. 19: Front and side view of a module with plants, showing the detail of the irrigation and the dripper;

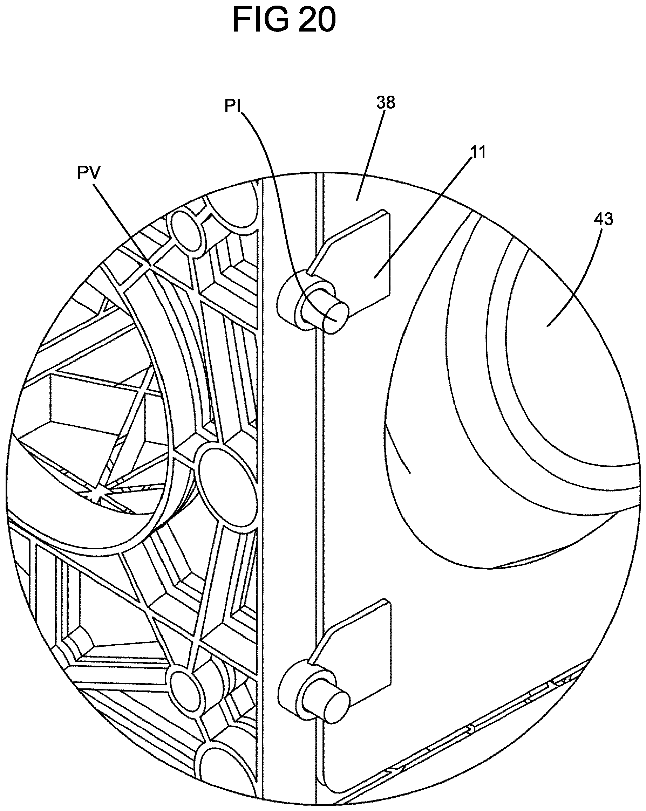

Fig. 20: Perspective view of an assembled module with a planting pot, showing the detail of the interlock with the module;

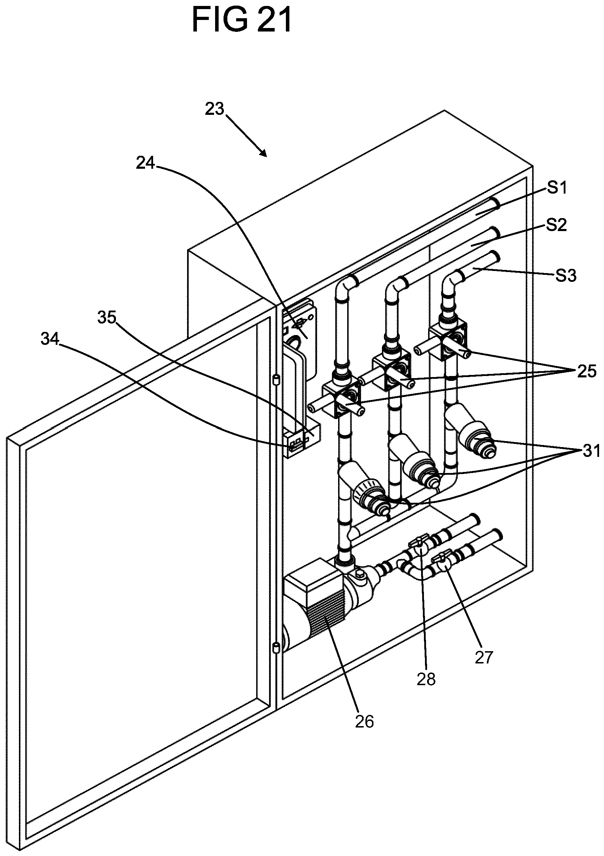

Fig. 21: Perspective view of the control panel of the modular vertical garden, with the front cover open showing its internal components;

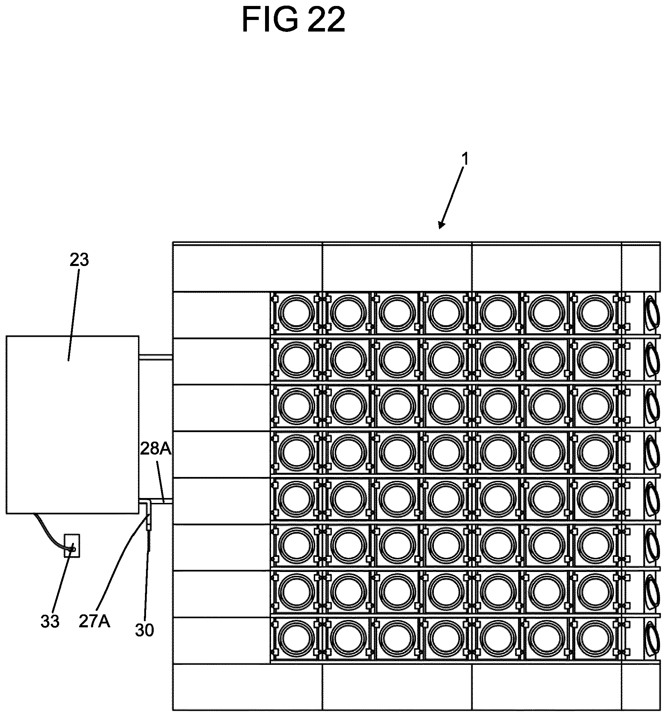

Fig. 22: Front view of the arrangement introduced in a modular vertical garden with automated irrigation and nutrition, showing the same fully assembled;

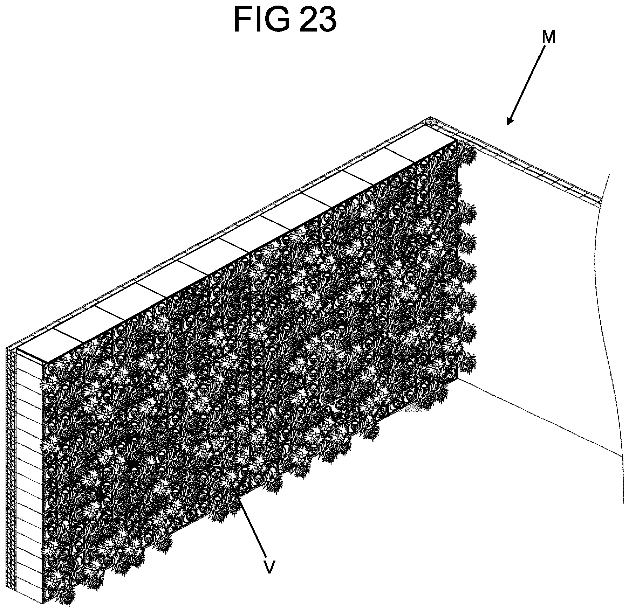

Fig. 23: Perspective view of the arrangement introduced in a modular vertical garden with automated irrigation and nutrition, showing a situation of use in an outdoor supporting wall with plants;

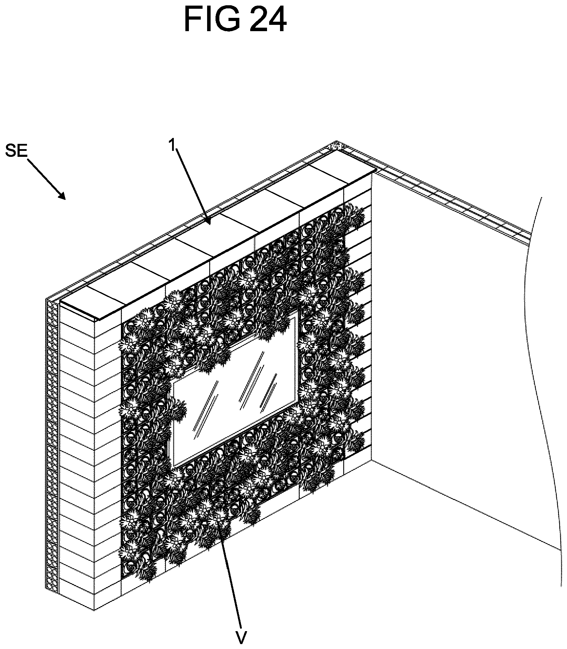

Fig. 24: Perspective view of the arrangement introduced in a modular vertical garden with automated irrigation and nutrition, showing a situation of use with a frame in an indoors environment and with plants.

The Arrangement Introduced In A Modular Vertical Garden With Automated Irrigation And Nutrition that constitutes the object of this patent application refers to a modular vertical garden (1) assembled with plates (P) that can be engaged with one another without limitations of size, preferably manufactured from recycled material provided with protection against ultraviolet radiation, which can be installed in an indoor environment such as, for example, a living room (LR) and in outdoor environments such as, for example, a supporting wall (SW).

More specifically, the modular vertical garden (1) is formed of modules (2), (3), (4) and (5) mounted with plastic plates (P), pins (PI) and clamps (CL) that provide a shape to each of the modules allowing the same to be secured to the wall with screws (SC).

The modules (2), (3), (4), (5) and are each formed of injected recycled plastic where module (2) may accommodate three plants (V), the module (3) is capable of accommodating two plants (V), the module (4) may accommodate only one plant, as well as the module (5) which refers to the corner piece that can accommodate only one plant (V) and the module , in turn, refers to the closing module that may be produced in four different sizes, to close the module (2) for three plants, the module (3) for two plants, to close the module (4) for one plant and to close the corner module (5).

The module (2) for three plants is comprised by a horizontal plate (PH) of rectangular shape that forms the lower base of the said module (2), provided with a plurality of ribs (7) in different positions and orifices (8) provided in parallel that form the coupling engagement means of the other plates (P) of the respective module; It further has four vertical plates (PV), these having a substantially rectangular shape, with the internal part thereof presents various ribs (7) in different positions, with circular openings of larger diameter (9) and smaller diameter (10).

At the central portion of the vertical plate (PV) and in juxtaposition to a circular rib, there are provided detachable accessories that aid the assembly of the modular vertical garden (1), these consist of two locks (11) and two pins (12). In turn, from the peripheral regions of the vertical plate (PV), more precisely from the outer part thereof, there project engagement pins (PI), where at the sides and the lower part the pins (PI) are double and equidistant and at the upper portion there is a single central pin (PI), that is coupled to the orifices (8) of the remaining plates.

Also in module (2) there is provided the back plate (PP) split into two parts (PPA) and PPB) with engagement means (13) alternating between pins (PI) and orifices (8), and throughout the plate there are provided ribs (7) in different positions and orifices (8) provided in parallel that form the engagement means for coupling the remaining plates (P) of the respective module and for securing the modules on surfaces such walls of masonry, wood, metal, among other materials, by means of screws (SC). Optionally, the horizontal plate (PH) may have the same configuration of the back plate (PP).

The modules (3) and (4) for two plants and one plant, have exactly the same configurations of the module (2), with due regard to the fact that for these cases there is recommended the cutting of the back plate (PP) depending on the need according to the size of the location where the modular vertical garden (1) will be installed. The modules may be expandable, vertically and horizontally, without limit of size, since each module is individually secured, each supporting its own weight to avoid overburdening caused by expansion.

The angle/corner module (5) comprises a horizontal corner plate (PHC) of substantially rectangular shape with a recess (14) in one of the vertexes thereof, provided with ribs (7) in different positions and orifices (8) that form the coupling engagement means of the remaining plates (P) of the respective module.

The closing module has the frontal closure plate (PFF) of rectangular shape, provided with a smooth outer face (15) with a tab (16) on one of the longer sides, and on the inner part it is provided with orifices (8) that match the pins (PI) of the vertical plates (PV) that complete the finishing.

The closing module also provides the vertical closure plate (PFV) substantially rectangular in shape, which outer face (17) is smooth and provided with a tab (18) in three sides thereof, and the inner face (19) presents the ribs (7) in different positions with two detachable locks (11) juxtaposed to the ribs (7). From the
outer peripheral region of the vertical closure plate (PFV) there project single engagement pins (PI), on the sides, and on the lower part, double equidistant pins (PI) and on the upper part a single central pin (PI), that are coupled with the orifices (8) of the remaining plates.

The vertical plates (PV) have, as referred above, circular openings of larger
diameter (9), one of them serving as a passage for the hose (20) for assembly of the irrigation (I) that is interlinked with the entire modular vertical garden (1). The openings of smaller diameter (10) serve for crossing of the clamp (CL) and provide the fastening between the modules.

For irrigation (I) there are provided hoses (20), drippers (21) and fittings (22)
that are assembled in line (L) crossing the modules, with one dripper (21) for each plant (V).

The automation of the irrigation (I) is provided by a control panel (23) comprising an electronic controller (24) that according to the programming thereof will actuate the solenoid valves (25) releasing the irrigation (I) of the modular vertical garden (1) by sector, as in the example with three sectors (Si), (S2) and (S3), and
possibly varying to more or less sectors depending on the size of the garden to be installed.

The control panel (23) further comprises an electrical pump (26), a valve (27) for controlling the admission of nutrients (27A) and a valve (28) for controlling the admission of water (28A), such that, in order to provide daily irrigation with water only, the water valve (28) should be open and the nutrients valve (27) should be closed.

For the addition of nutrients, the water valve (28) should be closed and the nutrients valve (27) should be open. The nutrients are diluted with water in a container in the proportion indicated for the said garden. The electrical pump (26) sucks the nutrients through the inlet (29) whereto is fitted an extension piece (30) that connects the inlet of the panel to the nutrients container.

The electrical pump (26) directs the fluids to the sectors (51), (S2) and (S3), passing by the filters (31) that avoid the ingress of dirt particles that might exist in the water and could clog the drippers (21), passing by the solenoid valves (25), the pressure regulators (26) that are in charge of maintaining the optimal pressure for opening of the drippers (21) and correct irrigation of all the plants (V) of the garden. The electronic controller (24) with grounding (32) is regulated for periodic irrigations (I) according to each case, and will control according to the previously programmed days, minutes and sectors.

The control panel (23) is supplied with power from the electrical outlet (33) with a circuit breaker (34) and a contactor switch (35) that constitute protection and maintenance equipment and the configuration thereof is determined by the size of the modular vertical garden (1) to be installed near the vertical garden and connected to the water and power outlets.

After all the modules (2), (3), (4) and (5) have been duly assembled, there are assembled the top plates (26) of simple construction with orifices (8), smooth
face (15) and tabs (16) for upper closure of the module, and these can further be of the corner piece version (37).

There are inserted the pots (38) made of recycled plastic material with a conical shape with upper (39) and lower (39') orifices suitable for the dripper (21) when
installed to provide the irrigation (I) and the upper locking tab (40). The said pots (38) are secured in the modules by the joint action of the lock (11) with the pin (PI). For the pots (41) of the corner piece, there are additionally provided two tabs (42) diametrically opposed and longer, similar to a "wing" for provision of adequate attachment thereof to the corner piece.

In order to plant the plantlets, the vertical garden (1) provides a sachet (43) fabricated in a geotextile material to maintain the humidity of the plant or vegetable (V) and the fertilization of the soil. The sachets (43) with the plants (V) are accommodated within the plastic pots (38) and (41). The modular vertical garden (1) comprises a collection tray (44) installed at the base thereof by means of slidable channel pieces (45) to avoid that any excess irrigation (I) might wet the floor below the garden, as well as being able to provide the reuse of that water for new irrigation (I).

## Claims

1. A modular vertical garden arrangement (1) having automated irrigation and nutrition, comprising;
plates, wherein the plates contain protection against ultraviolet radiation and form modules (2, 3, 4, 5) for engagement by pins (PI),
clamps that form each of the modules closed by top plates (36) and corner pieces (37), and
pots (38, 41) with upper orifices (39) being matched to a dripper (21) for the irrigation of a plant (V) located within a sachet (43) made of geotextile material, wherein the irrigation is effected by hoses (20), drippers (21) and fittings (22) that are assembled in line and are controlled by a control panel (23) which comprises an electronic controller (24), solenoid valves (25), an electrical pump (26), a valve (27) for admission of nutrients, and a valve (28) for the admission of water, and
further comprising a collection tray (44) installed at a base of the arrangement by means of slidable channel pieces (45).

2. A modular vertical garden arrangement according to claim 1, further comprising a means for reusing water collected in the collection tray to irrigate a plant located in the vertical garden arrangement.

3. A modular vertical garden arrangement according to either of claims 1 or 2, wherein the modules (2,3,4,5) are expandable, vertically and horizontally, without limit of size, and, each module (2,3,4,5) being attached individually and supporting its own weight to avoid overload caused by the expansion.

## Patentansprüche

1. Modulare vertikale Gartenanordnung (1) mit automatischer Bewässerung und Ernährung, mit:
Platten, wobei die Platten einen Schutz gegen ultraviolette Einstrahlung enthalten und Module (2, 3, 4, 5) zum Eingriff durch Stifte (PI) bilden,
Klemmen, die jedes der Module bilden, welche durch obere Platten (36) und Eckteile (37) geschlossen sind, und
Behältern (38, 41) mit oberen Öffnungen (39), die einem Tropfer (21) für die Bewässerung einer Pflanze (V) zugeordnet sind, welche in einem aus geotextilem Material ausgebildeten Beutel (43) angeordnet ist, wobei die Bewässerung mittels Schläuchen (20), Tropfern (21) und Fittings (22), die in Reihe angeordnet sind und mittels einer einen elektronischen Controller (24) aufweisenden Steuerkonsole (23) gesteuert werden, mittels Magnetventilen (25), einer elektrischen Pumpe (26), eines Ventils (27) zum Einlass von Nährstoffen und eines Ventils (28) zum Einlass von Wasser erfolgt, und
ferner mit einer Auffangwanne (44), die mittels Gleitkanalteilen (45) an einer Basis der Anordnung installiert ist.

2. Modulare vertikale Gartenanordnung nach Anspruch 1, ferner mit einer Vorrichtung zur Wiederverwendung in der Auffangwanne gesammelten Wassers zum Bewässern einer Pflanze, die in der vertikale Gartenanordnung angeordnet ist.

3. Modulare vertikale Gartenanordnung nach Anspruch 1 oder 2, bei der die Module (2, 3, 4, 5) vertikal und horizontal ohne Beschränkung der Größe erweiterbar sind und jedes Modul einzeln befestigt ist und sein eigenes Gewicht trägt, um eine aufgrund der Erweiterung verursachte Überlastung zu vermeiden.

## Revendications

1. Agencement de jardin vertical modulaire (1) ayant une irrigation et une nutrition automatisées, comprenant :
des plaques, dans lequel les plaques contiennent une protection contre le rayonnement ultraviolet et forment des modules (2, 3, 4, 5) pour la mise en prise par des broches (PI),
des pinces qui forment chacun des modules fermés par des plaques supérieures (36) et des pièces d'angle (37), et
des pots (38, 41) avec des orifices supérieurs (39) qui sont couplés à un goutte-à-goutte (21) pour l'irrigation d'une plante (V) située à l'intérieur d'un sachet (43) réalisé avec une matière géotextile, dans lequel l'irrigation est effectuée par des tuyaux flexibles (20), des goutte-à-goutte (21) et des raccords (22) qui sont assemblés en ligne et sont commandés par un tableau de commande (23) qui comprend un organe de commande électrique (24), des électrovannes (25), une pompe électrique (26), une vanne (27) pour l'admission des nutriments, et une vanne (28) pour l'admission de l'eau, et
comprenant en outre un plateau de collecte (44) installé sur une base de l'agencement au moyen de pièces de canal (45) coulissantes.

2. Agencement de jardin vertical modulaire selon la revendication 1, comprenant en outre un moyen pour réutiliser l'eau collectée dans le plateau de collecte pour irriguer une plante située dans l'agencement de jardin vertical.

3. Agencement de jardin vertical modulaire selon les revendications 1 ou 2, dans lequel les modules (2, 3, 4, 5) sont expansibles verticalement et horizontalement sans limite de taille, et chaque module (2, 3, 4, 5) étant fixé individuellement et supportant son propre poids pour éviter la surcharge provoquée par l'expansion.
